# EUROPEAN PATENT SPECIFICATION

(11) **EP 1 727 605 B1**
(45) Date of publication and mention of the grant of the patent: **26.09.2007**
(21) Application number: 05708982.3
(22) Date of filing: 10.03.2005
(51) Int. Cl.: A63H 11/00

(54) **ELECTRONIC DEVICE AND METHOD OF ENABLING TO ANIMATE AN OBJECT**
ELEKTRONISCHE VORRICHTUNG UND VERFAHREN ZUR BELEBUNG EINES GEGENSTANDS
DISPOSITIF ELECTRONIQUE ET PROCEDE POUR POUVOIR ANIMER UN OBJET

(30) Priority: 12.03.2004 EP 04101029
(43) Date of publication of application: 06.12.2006
(73) Proprietor: Koninklijke Philips Electronics N.V., 5621 BA Eindhoven (NL)
(72) Inventor: VAN BREEMEN, Albertus, J., N., NL-5656 AA Eindhoven (NL)
(74) Representative: Groenendaal, Antonius W. M.
(86) International application number: PCT/IB2005/050866
(87) International publication number: WO 2005/087337

(56) References cited:
- US-A1- 2003 049 098
- US-A1- 2003 144 764
- US-A1- 2003 191 560

## Description

The invention relates to an electronic device, and in particular to an electronic device capable of determining a new animation for at least part of an interactive robot or interactive virtual character.

The invention further relates to a method of enabling to animate an object, and in particular to a method of enabling to animate at least part of an interactive robot or interactive virtual character.

The invention also relates to a computer program product enabling upon its execution a programmable device to function as such an electronic device.

An embodiment of such an electronic device is known from "A User-Interface Robot for Ambient Intelligent Environments", written by A.J.N. van Breemen, K. Crucq, B.J.A. Krose, M. Nuttin, J.M. Porta and E. Demeester, published in proceedings of ASER 2003, Bardolino, Italy, pp. 176-182. This article describes an interactive domestic robot with a 'real' face consisting of dynamic mouth, eyes and eyebrows. Each of these objects can have one of several positions. Animation of an object from one position to another position is instantaneous. Although this allows the robot to quickly react to user input, it makes the robot's behaviour less believable and therefore communication between the robot and the user less efficient.

US-A-2003/0191560 discribes an example of an electronic pet system.

It is a first object of the invention to provide an electronic device of the kind described in the opening paragraph, which enables relatively fluent animation of an object in an interactive environment.

It is a second object of the invention to provide a method of enabling to animate an object of the kind described in the opening paragraph, which enables relatively fluent animation of an object in an interactive environment.

The first object is according to the invention realized in that the electronic device comprises a processing unit capable of determining a first part of a new animation of an object on the basis of at least one position of the object in a first animation and on the basis of a first part of a second animation of the object and capable of determining a second part of the new animation on the basis of a second part of the second animation. Instead of enabling animation of the first part of the second animation exactly as the author defined it, the electronic device advantageously enables instant reproduction of the second animation. As soon as user input is received that triggers the second animation, the first part of the new animation can be reproduced without causing an abrupt transition. The electronic device may be, for example, a consumer-electronics device in which a virtual character acts as a user interface for controlling the consumer-electronics device or it may be, for example, a robot.

The inventor has recognized that by applying audio-animatronics techniques to the known domestic robot, a believable interactive user-interface robot can be created. Audio-animatronics - the technique of creating lifelike mechanical characters - is known from amusement parks. The mechanical characters are animated according to a pre-defined sequence of positions to create smooth lifelike movements. These audio-animatronics techniques can also be applied to other animations, for example to animations of virtual characters, e.g. animals or persons, used in computer games or used in other computer or consumer-electronics related applications.

The inventor has further recognized that simple strategies for applying audio-animatronics to the known method of animating an object are disadvantageous. If a new animation has to be performed in response to a stimulus, e.g. user input, while a first animation is being performed, a first simple strategy of waiting until the first animation ends in a neutral position before performing a second animation starting from the neutral position may lead to delays and therefore less-interactive behaviour. If the first animation does not end in the same position as the second animation begins, it may even be necessary to create an additional delay to create a smooth transition between the two animations, as described in US 2003/0191560. On the other hand, a second simple strategy of aborting a first animation in a first position, moving the (virtual or mechanical) object instantaneously to a start position of the second animation, and performing the second animation leads to the less-believable animations performed by the known domestic robot. In the present invention, a transition filter combines a part of the first animation (i.e. at least one position) and a part of the second animation during a transition period to create smooth transitions between animations.

The second object is according to the invention realized in that the method comprises the steps of enabling to animate the object during a first period on the basis of at least one position of the object in a first animation of the object and on the basis of a first part of a second animation of the object and enabling to animate the object during a second period based on a second part of the second animation of the object. The first period is a transition period between the first animation and the second animation. In the second period, the displayed animation will generally be equal to the second part of the second animation.

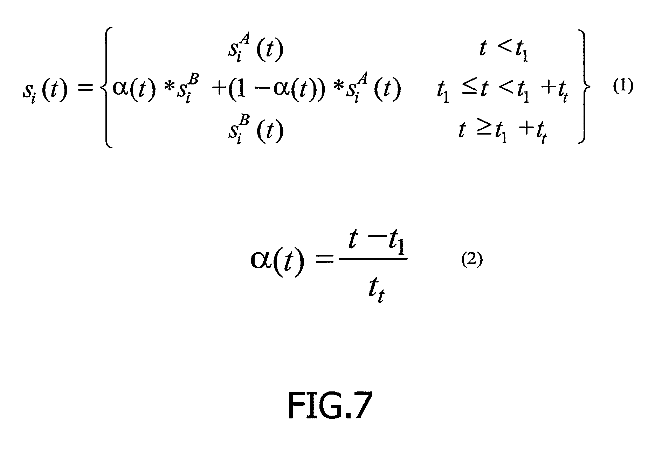

A new animation Sᵢ of an object i may be calculated by using equations (1) and (2) of Fig.7. In equations (1) and (2), t is the current time, tₜ is the length of the first period (the transition period), t₁ is the start time of the first period and t₁+tₜ is the end time of the first period and the start time of the second period. The first animation (for one object) is represented by the function Sᵢ^{A} and the second animation (for the same object) is represented by the function Sᵢ^{B}. The second animation starts at time t₁ and ends after time t₁+tₜ. The first animation starts before time t₁. The first animation does not necessarily continue until time t₁+tₜ: the first animation may be aborted at time t₁ or may end at a time t₂ between time t₁ and time t₁+tₜ. In the first case, Sᵢ^{A} (t) is equal to Sᵢ^{A}(t₁) between t₁ and t₁+tₜ. In the latter case, Sᵢ^{A} (t) is equal to Sᵢ^{A} (t₂) between t₂ and t₁+tₜ.

In equation (2), the scalar α linearly depends on the time. Making it depend exponentially on the time will make the interpolation even smoother. In an alternative to equation (1), Sᵢ(t) may be written as a recursive function. Between t₁ and t₁+t, Sᵢ(t+Δ) may, for example, be a linear combination of Sᵢ(t) and Sᵢ^{B} (t+Δ).

The method of enabling to animate of an object may be performed, for example, by a manufacturer manufacturing an electronic device by the electronic device itself, by a software developer developing software involving a virtual character, by the software itself, and/or by a service provider running the software. The animation may be calculated and displayed on different devices. For example, a server on the Internet may calculate the animation and a client on the Internet may display the animation. The animated object may be a whole robot or virtual character or a part (e.g. a mouth) of a robot or virtual character. An animation of a robot or virtual character may comprise multiple animations of parts of the robot or virtual character, each part having independent positions. In this case, it is advantageous to perform the method for each part independently, while using identical start and end times for the first period, i.e. the transition period.

These and other aspects of the method and electronic device of the invention will be further elucidated and described with reference to the drawings, in which:
Fig.1 shows a front view of an embodiment of the electronic device of the invention;
Fig.2 shows examples of facial expressions of the embodiment of Fig.1;
Fig.3 is a block diagram of the embodiment of Fig.1;
Fig.4 shows an animation of a facial expression of the embodiment of Fig.1;
Fig.5 is a block diagram showing details of two blocks of Fig.3;
Fig. 6 illustrates an animation of an object of the embodiment of Fig. 1 performed with the method of the invention; and
Fig. 7 shows two equations used to calculate the animation of Fig.6.

Corresponding elements within the drawings are identified by the same reference numeral.

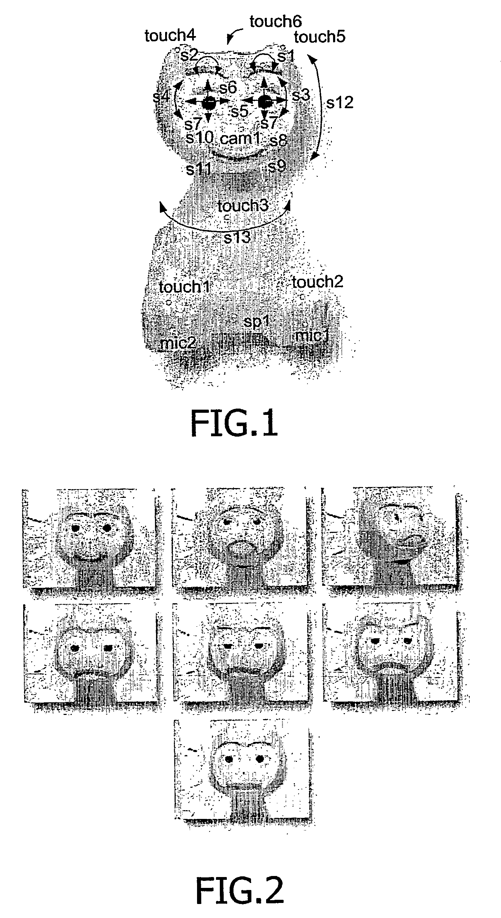

An embodiment of the electronic device is shown in Fig. 1: an emotional user-interface robot called iCat. iCat recognizes users, builds profiles of them and handles user requests. The profiles are used to personalize different kind of home automation functions. For instance, personalized light and sound conditions are used when a specific user asks icat to create a 'relaxing atmosphere'. In order to learn rich user-profiles, a good social relationship between the iCat and the user is required, because both should understand each other and be willing to spend time in teaching each other things about themselves. It is expected that a believable user-interface robot makes this relationship more enjoyable and effective.

Fig. 1 shows iCat's sensors and actuators. The robot is equipped with 13 standard R/C servos s1..s13 that control different parts of the face, such as the eye brows, eyes, eye lids, mouth and head position. Fig. 2 shows some of the facial expressions that can be realized by this servo configuration. In the nose a camera cam 1 is installed for face recognition and head tracking. iCat's foot contains two microphones mic1 and mic2 to record sound it hears and to determine the direction of the sound source. Also, a speaker sp1 is installed to play sounds (WAV and MIDI files) and to generate speech. Furthermore, iCat is connected to a home network to control in-home devices (e.g. light, VCR, TV, radio) and to obtain information from the Internet. Finally, several touch sensors touch1..touch6 are installed to sense whether the user touches the robot.

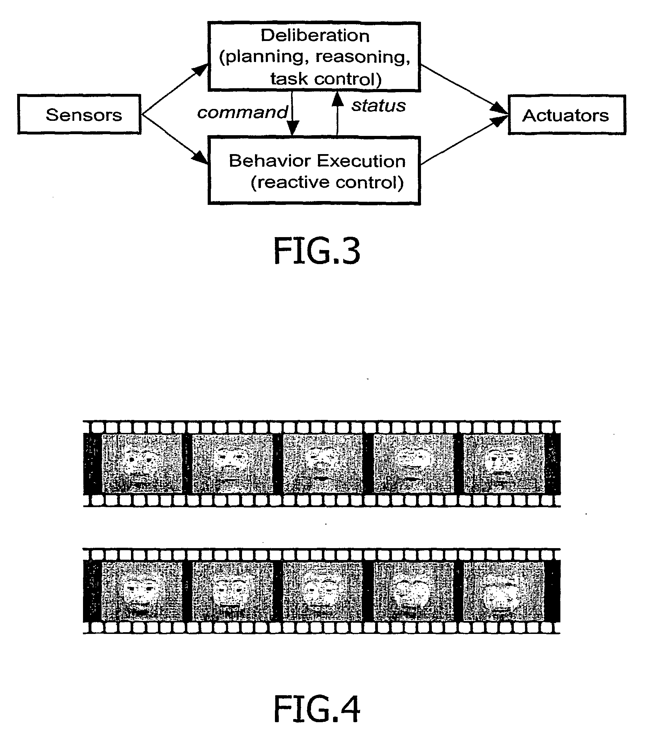

User-interface robots should be both able to perform reasoning (e.g. about the user's profile and intentions) and to react fast to user input (e.g. when user touches the robot). *A hybrid architecture* that offers deliberative as well as reactive capabilities fits these requirements best. Fig. 3 shows a common hybrid architecture. It consists of two layers that both receive sensor information and are able to access the actuators. The higher layer performs deliberative tasks such as planning, reasoning and task control. The lower layer performs behavior execution tasks. This layer contains a set of robot behaviors (control laws) that receive commands (e.g. setpoints, goals) from the higher deliberative layer. When a command is realized the robot behavior returns status information.

The field of Audio-Animatronics has developed engineering techniques to create lifelike characters. Their main approach is to build *prescripted* character performances, i.e. they program a script of servo, lights, sound and speech events that is being played when the character needs to perform. The advantage of this approach is that there is a precise control over the character's movements, which provides the opportunity to properly designed them using principles of animation. This way, believable behavior is realized. The disadvantage is the lack of interactivity: the character cannot act in another way then its program prescribed. Fig. 4 shows an example of a pre-programmed animation script applied to the user-interface robot iCat. This script is used to let iCat fall asleep. Instead of just lowering the head and closing the eyes, animation principles are used to animate the iCat. First, *anticipation* is used to prepare the user that iCat is going to sleep. Letting iCat first yawn does this (the top five frames in Fig. 4). Secondly, the *slow-in slow-out* animation principle is applied. By making movements more slow at the extremes they become more natural. The end result is a robot that behaves apparent and understandable.

A *robot animation* is a sequence of actuator actions - e.g. servo, light, sound and speech actions - that animates the robot. The main issue in animating robots, i.e. in computing how the robot should act such that it is believable and interactive, is developing a computational model that calculates the sequences of device actions. Different categories of computational models can be distinguished:
***Pre-programmed -*** The robot animation is stored in a table. Typically, such robot animations are hand-animated or generated from motion-captured data.
***Simulated -*** The robot animation is defined by a simulation / mathematical model; e.g. a eye-blink model.
***Imitation*** - The robot animation is learned online, e.g. while mimicking a human or other robot.
***Robot behavior** -* A control law, which uses sensor signals to generate device actions, defines the robot animation; e.g. head tracking.

Instead of using one computational model to animate user-interface robots, it is more advantageous to use multiple models. Each model defines a separate robot animation that controls only a restricted set of the robot's actuators. This way, different computational models can be used: pre-programmed models for falling asleep and waking up, simulation models for eye-blinking and robot behaviors for camera-based head-tracking and lip-syncing when speaking. Unfortunately, using multiple models introduces several problems. First, the individual models need to be started and stopped at the right moment and under the right conditions. The deliberation layer of the hybrid robot architecture calculates these conditions. Another problem arises when executing multiple robot animation models. Individual animation events need to be synchronized, such that servo, light, sound and speech events happen at the same time instance. Also, the individual actions of simultaneously active robot animations need to be merged. Finally, unwanted transient behavior (e.g. abrupt changes) that arises due to the switching between robot animations need to be handled properly.

A robot animation engine was developed to handle multiple computational models for animating user-interface robots. This engine is part of the behavior execution layer in a hybrid robot architecture. While higher level deliberation processes generate commands to control robot animations, the engine itself deals with the specific merging problems described in the previous section. An abstract robot animation interface was used to integrate different computational robot animation models. This interface defines three elementary aspects of a robot animation. First, every robot animation has a unique *name* attribute. This name is used to refer to the particular robot animation. Secondly, a robot animation has an *initialize* method that is called each time the robot animation is (re-) started. During this call variables such as counters can be given an initial value. Lastly, a robot animation has a method to provide *the next animation event.* Every particular computational robot animation model is derived from the abstract robot animation interface. Each may have additional attributes and methods relevant for that computational model. For instance, a pre-programmed robot animation is loaded from disc and therefore has a special method for this. An imitation-based robot animation typically has a method to learn new animation events.

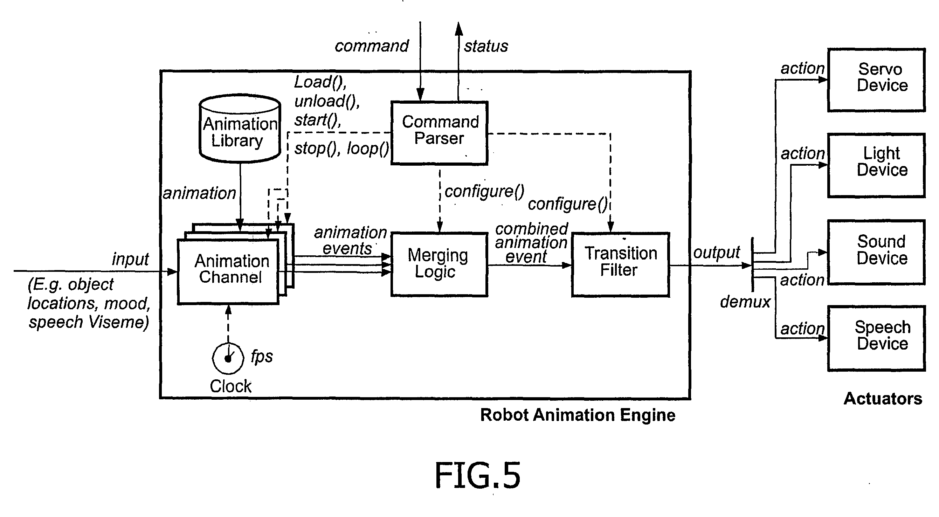

The robot execution engine is able to play several robot animations simultaneously, while handling the merging problems. Fig. 5 shows the architecture of the Robot Animation Engine and all its components:
***Animation Library -*** Preloads and stores all robot animations.
***Command Parser** -* Interprets commands received from a higher-level deliberation layer. ***Animation Channel*** - Controls the execution of a single robot animation.
***Merging Logic -*** Combines multiple animation events into a single event.
***Transition Filter** -* Realizes a bumpless sequence of animation events.
***Clock -*** Determines execution framerate of Animation Channels.

### Animation Channels

Layering - the use of multiple animations - is a common technique to create and manage believable character behavior in games. The known concept of an *animation channel* is used to control the execution of multiple animations. In contrast to a robotic behavior-based architecture, animation channels can at runtime be loaded and unloaded with robot animations from the Animation Library. Different channel parameters can be set to control the execution of the loaded robot animation. For instance, an animation channel could loop the animation, start with a delay, start at a particular frame or synchronize on another animation channel. Once the robot animation has been loaded and all parameters have been set, the animation can be started, stopped, paused or resumed.

### Merging Logic

While prioritizing animations is a standard technique to merge animations, it is not able to handle all blending situations. Therefore a runtime configurable Merging Logic component is used, which provides the flexibility to use the animation engine for different situations, each requiring its own blending strategy. The specific blending configuration of the Merging Logic component can be set at runtime on a per-actuator basis. For every individual servo, light, sound or speech channel a blending operator can be configured. The following blending operators are available:
*Priority* - Actuator actions with a lower priority are overrules by those with a higher priority.
*(Weighted) Addition -* Actuator actions are multiplied by a weighting factor and added.
*Min*/*Max -* The actuator action with the minimum / maximum value is selected.
*Multiplication* - All actuator actions are multiplied.

These operators are commonly used in both the area of robotics as well as animation. Additional known operators that could be added to extend the Merging Logic component include multiresolutional filtering, interpolation, timewarping, wave shaping and motion displacement mapping.

### Transition Filter

Suddenly changing from one robot animation to another one may result into an abrupt transition. One technique to prevent this is using special key-frames to define start and end frames of robot animations. A new robot animation can only be started when its start frame matches the end frame of the previous robot animation. This technique, however, cannot be applied to robot behaviors as the actuator actions are calculated at runtime from sensor inputs and internal variables. Therefore, a second technique is used: filtering. A Transition Filter component is used to realize smooth transitions between robot animations.

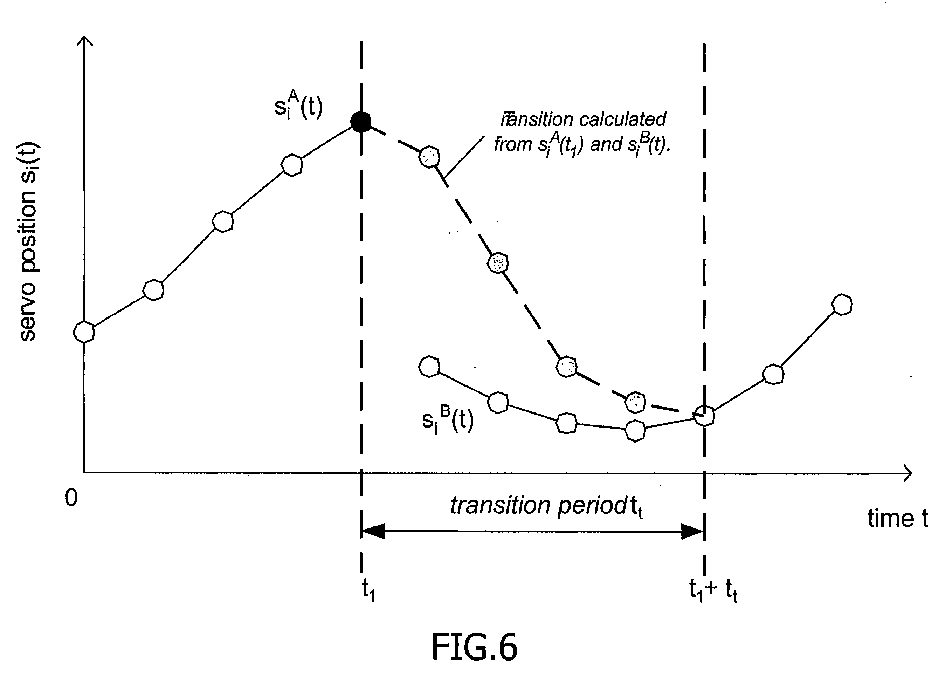

Fig. 6 illustrates the workings of the Transition Filter for a servo *sᵢ*. At time *t₁* a switch occurs. During a limited time period, called the *transition period tₜ,* the new servo animation *s^{B}ᵢ* is combined with the last value of the previous servo animation *s^{A}ᵢ* using the equations (1) and (2) of Fig.6. The Transition Filter calculates a linear combination of both robot animations during the transition period. The scalar α linearly depends on the time; making it depend exponentially on the time will make the interpolation even smoother.

### Application

To evaluate the proposed Robot Animation Engine a scenario was developed in which the user-interface robot iCat manages lights and music in an Ambient Intelligence home environment called HomeLab. Speech was used to make requests to iCat. Besides recognizing speech, iCat had to be able to perform head tracking, such that it keeps looking at the user while the user speaks, lip-syncing while it speaks to the user, eye-blinking to become more life-like and showing facial expressions to react properly to the users request (e.g. looking happy when the request was understood and looking sad when the request was unclear). Different computational models were used to realize these robot animations.

Five animation channels were defined to deal with the multiple robot animations. Table 1 shows these channels and describes their purpose. For instance, channel 0 is used for robot animations controlling all actuator devices (e.g. a falling asleep robot animation as shown in Fig. 4) and channel 2 is used by a lip-syncing robot animation to control the four servos of the mouth (s8, s9, s10, s11; see Fig. 1).

**Table 1**

| **Channel** | **Name** | **Description** |
|---|---|---|
| 0 | Full-Body | Plays robot animations controlling all devices (s1 ... s13, spl). |
| 1 | Head | Plays robot animations controlling the head up/down (s12) and left/right (s13) servos, and the eyes (s5, s6, s7). |
| 2 | EyeLid | Plays robot animations controlling the eyelids servos (s3, s4). |
| 3 | Lips | To play robot animations controlling the four mouth servos (s8, s9, s10, s11), |
| 4 | Face | Facial expressions (s1 ... s13, sp1). |

While the invention has been described in connection with preferred embodiments, it will be understood that modifications thereof within the principles outlined above will be evident to those skilled in the art, and thus the invention is not limited to the preferred embodiments but is intended to encompass such modifications. The invention resides in each and every novel characteristic feature and each and every combination of characteristic features. Reference numerals in the claims do not limit their protective scope. Use of the verb "to comprise" and its conjugations does not exclude the presence of elements other than those stated in the claims. Use of the article "a" or "an" preceding an element does not exclude the presence of a plurality of such elements.

'Means', as will be apparent to a person skilled in the art, are meant to include any hardware (such as separate or integrated circuits or electronic elements) or software (such as programs or parts of programs) which perform in operation or are designed to perform a specified function, be it solely or in conjunction with other functions, be it in isolation or in co-operation with other elements. The electronic device can be implemented by means of hardware comprising several distinct elements, and by means of a suitably programmed computer. 'Computer program' is to be understood to mean any software product stored on a computer-readable medium, such as a floppy disk, downloadable via a network, such as the Internet, or marketable in any other manner.

## Claims

1. An electronic device, **characterised by** comprising a processing unit capable of:
- determining a first part of a new animation of an object (s1...s12) on the basis of at least one position of the object (s1..s12) in a first animation and a first part of a second animation of the object; and
- determining a second part of the new animation on the basis of a second part of the second animation.

2. An electronic device as claimed in claim 1, wherein the electronic device is a robot and the object comprises one or more servos of the robot.

3. An electronic device as claimed in claim 1, wherein the duration of the first part of the new animation does not depend on the start time of the second animation.

4. An electronic device as claimed in claim 1, wherein the processing unit executes the first part of the new animation as soon as certain user input is received, the certain user input triggering the second animation.

5. An electronic device as claimed in claim 1, wherein a contribution of the first part of the second animation to the first part of the new animation increases exponentionally during a transition period.

6. A computer program product enabling upon its execution a programmable device to function as the electronic device of claim 1.

7. A method of enabling to animate an object (s1 ...s12), **characterised by** comprising the steps of:
- enabling to animate the object (s1...s12) during a first period on the basis of at least one position of the object in a first animation of the object (s1...s12) and a first part of a second animation of the object (s1...s12); and
- enabling to animate the object (s1...s12) during a second period on the basis of a second part of the second animation of the object (s1...s12).

## Patentansprüche

1. Elektronische Anordnung, **dadurch gekennzeichnet, dass** diese eine Verarbeitungseinheit aufweist, die zu Folgendem imstande ist:
- das Ermitteln eines ersten Teils einer neuen Animation eines Gegenstandes (s1...s12) auf Basis wenigstens einer Position des Gegenstandes (s1...s12) in einer ersten Animation und eines ersten Teils einer zweiten Animation des Gegenstandes, und
- das Ermitteln eines zweiten Teils der neuen Animation auf Basis eines zweiten Teils der zweiten Animation.

2. Elektronische Anordnung nach Anspruch 1, wobei die elektronische Anordnung ein Roboter ist und der Gegenstand einen oder mehrere Servos des Roboters enthält.

3. Elektronische Anordnung nach Anspruch 1,m wobei die Dauer des ersten Teils der neuen Animation nicht von der Startzeit der zweiten Animation abhängig ist.

4. Elektronische Anordnung nach Anspruch 1, wobei die Verarbeitungseinheit den ersten Teil der neuen Animation durchführt, und zwar sobald bestimmte Benutzereingaben empfangen werden, wobei die bestimmten Benutzereingaben die zweite Animation auslösen.

5. Elektronische Anordnung nach Anspruch 1, wobei ein Beitrag des ersten Teils der zweiten Animation zu dem ersten Teil der neuen Animation während einer Übergangsperiode exponentiell ansteigt.

6. Computerprogrammprodukt, das bei Durchführung ermöglicht, dass eine programmierbare Anordnung wie die elektronische Anordnung nach Anspruch 1 funktioniert.

7. Verfahren zum Ermöglichen der Animation eines Gegenstandes (s1...s12), **dadurch gekennzeichnet, dass** das Verfahren die nachfolgenden Verfahrensschritte umfasst:
- das Ermöglichen einer Animation des Gegenstandes (s1...s12) während einer ersten Periode auf Basis wenigstens einer Position des Gegenstandes in einer ersten Animation des Gegenstandes (s1...s12) und eines ersten Teils einer zweiten Animation des Gegenstandes (s1...s12) und
- das Ermöglichen einer Animation des Gegenstandes (s1...s12) während einer zweiten Periode auf Basis des zweiten Teils der zweiten Animation des Gegenstandes (s1...s12).

## Revendications

1. Dispositif électronique **caractérisé en ce qu'**il comprend une unité de traitement capable de :
- déterminer une première partie d'une nouvelle animation d'un objet (s1... s12) sur la base d'une position au moins de l'objet (s1...s12) dans une première animation et d'une première partie d'une deuxième animation de l'objet, et
- déterminer une deuxième partie de la nouvelle animation sur la base d'une deuxième partie de la deuxième animation.

2. Dispositif électronique suivant la revendication 1, dans lequel le dispositif électronique est un robot et l'objet comprend une ou plusieurs servocommandes du robot.

3. Dispositif électronique suivant la revendication 1, dans lequel la durée de la première partie de la nouvelle animation ne dépend pas de l'instant de début de la deuxième animation.

4. Dispositif électronique suivant la revendication 1, dans lequel l'unité de traitement exécute la première partie de la nouvelle animation dès qu'une certaine entrée de l'utilisateur est reçue, la certaine entrée de l'utilisateur déclenchant la deuxième animation.

5. Dispositif électronique suivant la revendication 1, dans lequel une contribution de la première partie de la deuxième animation à la première partie de la nouvelle animation augmente de manière exponentielle pendant une période de transition.

6. Produit formant programme informatique permettant, lors de son exécution, qu'un dispositif programmable fonctionne comme le dispositif électronique suivant la revendication 1.

7. Procédé permettant d'animer un objet (s1...s12), **caractérisé en ce qu'**il comprend les étapes suivantes :
- le fait de permettre d'animer l'objet (s1...s12) pendant une première période sur la base d'une position au moins de l'objet dans une première animation de l'objet (s1...s12) et d'une première partie d'une deuxième animation de l'objet (s1...s12), et
- le fait de permettre d'animer l'objet (s1...s12) pendant une deuxième période sur la base d'une deuxième partie de la deuxième animation de l'objet (s1...s12).
